# EUROPEAN PATENT APPLICATION

(11) **EP 2 045 303 A1**
(43) Date of publication of application: **08.04.2009**
(21) Application number: 07291215.7
(22) Date of filing: 05.10.2007
(51) Int. Cl.: C09J 7/02, C09J 7/04, D03D 15/00

(54) **Abrasion-resistant adhesive tape**

(71) Applicant: Scapa France, 26000 Valence Cedex (FR)
(72) Inventor: Mayan, Robert, 26000 Valence (FR); Toledano, Léonor, 74330 Sillingy (FR)
(74) Representative: HOFFMANN EITLE

(57) **Abstract**

This invention relates to adhesive tapes comprising a polyester support, a polymer coating, and an adhesive layer. The polymer coating may be on the side opposite the adhesive layer or between the support and the adhesive layer. The adhesive tape of the present invention is particularly suited for wire harnessing in the automotive industry.

## Description

The present invention relates to an abrasion-resistant adhesive tape. The tape is particularly useful as a wire harnessing tape for use in the automotive industry.

### Background of the Invention

Pressure sensitive adhesive (PSA) tapes are widely used in the automotive industry to manufacture wire harness assemblies. Different adhesives are applied to specialty backings and carriers, such as films, foams and textiles, to provide products that meet a variety of requirements. Although PSA tapes account for just a fraction of the total component cost, they are critical to the manufacturing of cost-effective automotive wire harness assembly. In 2003, more than 150 million square meters of wire harness tape was used by the automotive industry around the world.

The average vehicle's wire harness system consists of approximately 1000 meters of wire and runs from the engine compartment through the passenger area to the trunk. These distinct environments require tapes with diverse performance capabilities. For example, tapes used in the engine compartment must resist fluids and high temperatures. Harnesses in the interior instrument panel, door panel and overhead areas require tapes that attenuate noise, vibration and minimize squeaks and rattles due to wire harness movement at high speeds.

The PSA tapes used in automotive harness assemblies are selected based on the application, the location of the assembly within the vehicle, and performance requirements. Tape selection is done by the harness manufacturer, conforming to OEM (original equipment manufacturer) specifications to ensure reliable vehicle operation and vehicle safety throughout its lifetime.

These tapes have to meet specific requirements to perform well during application and a life cycle of a car. Among the functions these tapes have to fulfil, the most important ones are containment of cables and splicing. Three main ways of wrapping cables to build a wire harness are known: (i) spiral, better described as helicoidal, (ii) flag, and (iii) clip wrapping. Depending on the required level of sound dampening, abrasion resistance and temperature shielding, one of these wrapping techniques will be used. During the production of wire harnesses, tapes are mainly applied manually and therefore must have defined and consistent unwinding characteristics, good pliability and flexibility and must be tearable by hand. Some operators tear in crosswise direction, others tend to break the tape by stretching longitudinally. Such problems were addressed by EP 1 074 595 where a tearable adhesive tape is described. When stretched, tapes commonly exhibit a behaviour described as curling, where the stress leads to deformation in U- or S-shape. Curling increases the risk of flagging and thus has to be minimized as described in EP 1 136 535 where an adhesive tape with a velvet based support is described.

During the useful life of a car, pressure sensitive adhesive tapes must maintain excellent adhesion to cables over many years. In addition to strong adhesion to a wide range of cables, appropriate mechanical properties are required. Excellent aging resistance, resistance to automotive fluids, sound dampening, and an ability to withstand abrasion are key properties. If tapes are employed in the passenger compartment, low odour and fogging properties are increasingly important. Ultimately, a harnessing tape product has to meet cost expectations of users.

Even though tapes offering good tearing ability such as EP 1 074 595 or better curling and stretching properties as in EP 1 136 535 are known in the art, a tape that specifically imparts excellent abrasion resistance has not been described. The inventors have now solved this problem and disclose their invention here.

### Summary of the Invention

A common problem found within the automotive industry is the lack of suitable abrasion-resistant tapes for wire harnessing. In order to solve this problem, the inventors undertook a study whereby they coated various adhesive tape supports with different coatings and compared their abrasion resistant performances. Surprisingly, it was found that a polyester support coated with a polymer coating exhibited abrasion-resistant properties that were far superior to those based on other tape supports. More surprisingly, it was found that the maximum tensile strength increased only slightly with increased abrasion resistance.

In the current invention, a polyester support is thus coated with a polymer coating to form, subsequent to the further coating with an adhesive layer, a superior abrasion-resistant adhesive tape. Since only a slight gain in maximum tensile strength is observed, the superior abrasion resistant tape is still suitable in applications where hand tear-ability is an important factor. In addition, the increase in abrasion resistance afforded by the polymer coat allows the use of thinner and cheaper polyester supports in the tape manufacture.

The tape is not limited in its use and can be used for any application that requires the use of an adhesive tape with high abrasion resistance properties. A non-limiting example of such an application is for wire-harnessing in the automotive industry.

### Detailed Description of the Invention

### Polyester Support

The tape of the present invention comprises a polyester support. Preferred for this invention is a woven support composed of polyester threads, said threads being composed primarily of polyester fibers and, or, yarns. The woven support is preferably composed of warp and weft threads having a titre less than 200 dtex. Warp and weft threads are not restricted to having the same titre values and may have the same titre or different titre values. Particularly preferred are warp threads having a titre of less than 100 dtex, most preferred being those having a titre of 10 to 90 dtex, particularly 30 to 70 dtex. With respect to the weft threads, preferred are those having a titre of 100 to 200 dtex, particularly 140 to 190 dtex.

The number of warp and weft threads per unit cm is limited only by practical restraints on the number of threads possible in the weaving process but is preferably between 8 and 85, and more preferably between 10 and 80 threads per unit cm for the warp threads, and more preferably between 10 and 65 threads per unit cm for the weft threads. While any weave patterns such as plain weave, satin or tweed may be used to create the support, plain weave is most preferred.

In the most preferred embodiment, the support consists of a single layer of a plain weave PET fabric, made of warp yarns having a titre of 10 to 90 dtex at 12 to 70 threads per cm and weft yarns having a titre of 140 to 190 dtex at 12 to 55 threads per cm.

While not limited to any particular polyester, the polyester of the current invention is preferably polyethylene terephthalate (PET). Polyester supports suitable for this invention are those commonly known in the art and supplied by manufacturers including Milliken, Sedatex, Subrenat, Chamatex, TRP Charvet and Thiollier. Examples of suitable fabrics from these companies include: Concordia: T111860, T111887, 450812, Safety, Port, Security; Subrenat: 5513, 5525, 5525 Teint Noir, 5525 calandré 40T, 5525 calandré 60T; TRP: Charvet 70006, Charvet E/16; Chamatex: n°1; Sedatex: Insolmides 1, Insolmides 2, and Nefor.

For harnessing tapes, black colour is mandatory, so black coloured fibers may be employed in the manufacture of the textile. Black colour can be imparted by two different processes well known in the art. One possibility is dyeing the fabric in a wet process common in textile colouration. The other option is using pigmented yarns in the weaving process, thereby eliminating the necessity to perform an additional, separate dyeing step.

### Polymer Coating

The polymer coating may be applied on the side opposite the adhesive layer (hereinafter referred to as a topcoat) or between the support and the adhesive layer (hereinafter referred to as an undercoat). The polymer coating may be applied to the polyester support by any manner known in the art, with methods such as floating knife, reverse roll coating or knife over blanket techniques being most preferred.

The amount of polymer coating applied to the polyester support depends on the particular application, but usually is under 50 g/m², preferably under 45 g/m², and most preferably under 40 g/m². For the polymer coating to impart suitable abrasion resistance properties, the coating should be present in at least about 1 g/m², preferably greater than 2 g/m², more preferably greater than 5 g/m², and most preferably greater than 10 g/m².

The polymer coating may be made up of any polymer that improves the abrasion resistance of the polyester support.

Preferred coating materials comprise polyurethane, acrylic, or silicone polymers.

Suitable polyurethane polymers are those that comprise aliphatic or aromatic constituents and may contain one or two component polyurethanes. Typical, but non-limiting, examples of coating materials are solutions of polyurethanes, aqueous polyurethane suspensions and high solid products which are substantially solvent free. Examples of the polyurethane that can be used as a coating are those which are available under the trade names Impraperm^{®} and Impranil^{®} from Bayer Material Science AG, Leverkusen, Germany; Idrocap^{®} from ICAP-Sira, Milan, Italy; or Luprapret^{®} from BASF, Ludwigshafen, Germany. These polyurethane systems provide increased resistance to abrasion while maintaining flexibility of the support. These coatings may be cured using cross-linkers. Polyurethane coatings may be used when higher elasticity properties are required, for example, on elastic fibers.

When the polymer coating of the current invention is an acrylic coating, the coating preferably comprises a water-based acrylic co-polymer based on one or more of (1) an alkyl-acrylate where the alkyl group may contain a linear or branched C1-4 hydrocarbon group, (2) an alkylmethacrylate where the alkyl group may contain a linear or branched C1-4 hydrocarbon group, (3) acrylic acid, (4) methacrylic acid, (5) acrylonitrile, and (6) styrene. Preferred acrylics include, but are not limited to a co-polymer of one or more of methyl methacrylate, ethyl-acrylate, butyl-acrylate, methacrylic acid or acrylonitrile. Suitable acrylic coatings for use in this invention are those offered by BASF under the trade name of Lurapret^{®} such as Lurapret D2337, D2373, D250, D313, D420, D500, D579, DPH, DPS, DS700, DT400, DT880 and DTU and Acrilem^{®} from ICAP-Sira.

For pure acrylic coatings, Tg correlates with softness with lower Tg values resulting in higher softness. Useful Tg ranges are from -30°C to 35°C. When the coating comprises acrylic monomers, the present invention is best carried out with those coatings which exhibit a Tg of about -30°C or greater, preferably about -5°C or greater, more preferably about 0°C or greater, and most preferably about 16°C or greater. An upper limit to the Tg is preferably about 35°C. The benefits of using pure acrylics are excellent light fastness and the soft grades available. A Styrene-acrylic coating is less expensive than a pure acrylic coating, and can be used as an alternative coating when cheaper products are required.

Suitable silicone coating materials are those offered by Wacker Silicones, Munich, Germany under the trade name of Elastosil^{®} and by Dow Corning, Midland, MI, USA under the Dow Corning and Silastic trade names. Examples of such materials include Elastosil LR6250 F (commercial product of Wacker-Chemie GmbH) and Dow Corning 3629, 3625 and 3715.

The polymer coating may contain, besides the main polymer component one or more additives, such as flame retardants (e.g. Sancure^{®} 20037 from Lubrizol Advanced Materials Inc., Cleveland, US), fillers, pigments and/or silicone additives. To alter the properties of the coating, additives such as wetting agents (e.g. Supronil^{®} HN78), antifoaming agents (e.g. Supronil^{®} HS or HE-series), wetting materials as well as dyes (e.g. Supron^{®} dyes) and thickening agents (Wesopret^{®} series) may also be added. Supronil^{®} and Wesopret^{®} are trade names of products offered by Weserland Chemie, Hanover, Germany.

Flame retardancy of the tape end-product can be greatly enhanced by addition of suitable compounds such as Sb₂O₃, Al₂O₃, MgO, inorganic or organic phosphate salts or for example, by combining halogenated polymers like ethylene-vinyl chloride copolymers and inorganic or phosphorous flame retardants. Airflex 4530 and hydrated compounds like alumina trihydrate or magnesium hydroxide can be blended and applied to the base polymer. Nano-filled composites have recently been introduced to improve flame retardance of plastic materials. Replacements of heavy metals previously used, such as aluminum trihydroxides (ATH), require loadings of 60 to 65 percent. As a result, mechanical properties are compromised and the compounds are more difficult to process. The amount of ATH can be significantly reduced by adding a single digit percentage of a nanoclay like Nanofil^{®} (Süd-Chemie, München). Nanofil^{®} is produced from natural high purity layered silicate based on montmorrillonite. The combination of conventional flame retardants and nano-sized particles has synergistic effects, which increases flame retardance significantly compared to a standalone usage of the components. Commercial nanoclay suppliers include Elementis, Laviosa Chemica Mineraria, Nanocor, Southern Clay Products and Süd-Chemie.

DIOFAN A 585 from Solvay S.A., Düsseldorf, Germany is an anionic aqueous dispersion of vinylidene chloride/butyl acrylate/methyl actylate terpolymer intended to be used as flame retardant binder for textiles and nonwovens. US 6,344514 discloses a formulated binder consisting of styrene-butadiene lattices and diammonium phosphate. Flame retardancy of Vycar 590x4 of Noveon (available in Europe from VELOX GmbH, Hamburg, Germany), which is a plasticized vinyl chloride copolymer emulsion, is significantly enhanced when the latex is compounded with 2 to 5 parts Antimony oxide per 100 parts latex solids. Preferably, retardants with different chemical compositions are combined to act in a synergistic way. All of the above-mentioned substances and combinations thereof can be used to impart the desired level of flame retardancy to the tape end-product. Most preferably, they are applied together with the polymer coating.

Suitable fillers and pigments are carbon black, titanium dioxide, calcium carbonate, zinc carbonate, zinc oxide, silicates, and silica.

Suitable silicone additives like Wacker CT 45 E, Dow Corning Additives 22, 23 or 27 or Icap-Sira Icasil H811 are widely used in textile coatings to improve hand, release against adhesive surface like low adhesion backsize (LAB) and abrasion resistance. Dow Corning 27 Additive is a solvent-less, non-reactive silicone ethylene-propylene-glycol copolymer surfactant with both silicone and organic characteristics and is primarily used in reducing the coefficient of friction and may be incorporated into solvent, aqueous, solvent-less and energy curable systems. It is generally effective at concentrations ranging from 0.1 to 1.0 weight percent, based on total solids. Dow Corning 22 and 23 Additives are polydimethylsiloxane elastomer powders which impart mar and abrasion resistance to a wide range of coating systems. The epoxy functionality of Dow Corning 23 Additive promotes the incorporation into the resin binder matrix. They are suitable for water-based systems and typically are added at levels of 0.5 to 5%, based on coating solids.

The addition of a silicone additive is particularly preferred when the coating layer is provided as a top coat.

### Adhesive Layer

Pressure-sensitive adhesives of various chemical compositions can be employed in the present invention. Acrylates and natural or synthetic rubber compositions are especially suitable, either in the form of solvent-based, water-based or hot-melt adhesives. For special applications, silicone adhesives available from Dow Corning and GE Silicones can provide superior adhesion to low energy surfaces and exhibit high temperature resistance. Appropriate pressure-sensitive adhesives are described in D. Satas: Handbook of Pressure Sensitive Adhesive Technology 2nd Ed. (Van Nostrand Reinhold, New York, 1989) and are available from a range of well known suppliers like National Starch & Chemical (Duro-Tak), Rohm & Haas, Lucite, Ashland Chemical, Cytec and ICAP-Sira. Important suppliers of hot melt adhesives are BASF, Collano, H.B. Fuller or Novamelt. Hot melt adhesives can require crosslinking to withstand higher temperatures. Particularly suitable is a range of UV-curable acrylic hot melt adhesives offered by Collano AG, Switzerland under the brand name Collano UV N1 and by BASF under the trade name AcResin.

To optimize its properties, the adhesive may be blended with one or more additives such as tackifiers, plasticizers, fillers, pigments, UV absorbers, light stabilizers, aging inhibitors, crosslinking agents, crosslinking promoters or elastomers.

Suitable elastomers for blending include EPDM (ethylene propylene diene monomer) or EPM (ethylene propylene monomer) rubber, polyisobutylene, butyl rubber, ethylene-vinyl acetate, hydrogenated block copolymers of dienes, including and not limited to styrene-isoprene-styrene (SIS), styrene-ethylene-butadiene (SEB), styrene-ethylene-butadiene-styrene (SEBS), styrene-ethylene-butadiene-styrene/styrene-ethylene-butadiene (SEBS/SEB), styrene-butadiene-styrene (SBS), styrene-isoprene-butadiene-styrene (SIBS), and acrylate copolymers such as ACM (ethyl butyl acrylate copolymer).

Suitable tackifiers include hydrocarbon resins (e.g. of unsaturated C5 or C7 monomers), terpene-phenol resins, terpene resins from raw materials such as pinene, aromatic resins such as coumarone-indene resins, or resins of styrene or -methyl styrene, such as rosin and its derivatives such as disproportionated, dimerized or esterified resins, tall oil and its derivatives and also others, as listed in *Ullmann's Encyclopedia* of *Industrial Chemistry,* 5th Edition, VCH, Weinheim 1997, Weinheim. Particularly suitable are aging-resistant fully saturated resins without olefinic double bonds.

Examples of suitable fillers and pigments are carbon black, titanium dioxide, calcium carbonate, zinc carbonate, zinc oxide, silicates, and silica.

Suitable UV absorbers, light stabilizers and oxidative aging inhibitors are well known in the art. Examples include antioxidant Vulkanox BKF (2,2'-methylene-bis-(4-methyl-6-t-butylphenol), antioxidant Irganox 1010 (Pentaerythritol tetrakis(3-(3,5-di-tert-butyl-4-hydroxyphenyl)propionate)) and UV stabilizers Irganox 1726, Irgafos 168, Tinuvin 234 which preferably are combined and added by maximum 1% by weight relative to the dry adhesive to improve stability of the adhesive.

Examples of suitable plasticizers include aliphatic, cycloaliphatic and aromatic mineral oils, diesters or polyesters of phthalic acid, trimellitic acid or adipic acid, liquid rubbers (e.g., nitrile rubbers or polyisoprene rubbers), liquid polymers of butene and/or isobutene, acrylates, polyvinyl ethers, liquid resins and soft resins based on the raw materials for tackifier resins, lanoline and other waxes. Aging-resistant plasticizers without an olefinic double bond are particularly suitable.

Crosslinking can be achieved by chemical reaction, EB- or UV-curing or addition of sulphur curatives or organometallic coupling agents based on polyvalent metal ions like aluminum, zirconium and titanium. The Tyzor range by DuPont is widely used. Examples of further crosslinking agents include phenolic resins (which may be halogenated), melamine and formaldehyde resins. Suitable crosslinking promoters include maleimides, allyl esters such as triallyl cyanurate, and polyfunctional esters of acrylic and methacrylic acid. Use of crosslinked adhesives is especially preferred for high temperature applications of the tape, especially in engine compartments.

Adhesive coating weights used in the present invention are preferably in the range of 20 to 200 g/m². Within this range, desired pressure sensitive adhesion properties can be obtained with an acrylic copolymer, or with a synthetic or a natural rubber adhesive well known in the industry. More preferably, the adhesive coating weights are in the range of 30 to 150 g/m².

The adhesive tapes are manufactured by coating the support, coated with the polymer coating, with pressure sensitive adhesives. The main processes used are coating of hot melt or liquid adhesives, either by transfer or direct coating. Transfer coating uses an intermediate carrier like silicone paper or film or a siliconized belt to dry or partially dry the adhesive layer before laminating it to the backing. Direct coating transfers dissolved or molten adhesive on the carrier, with subsequent cooling or evaporation of solvent. Commonly, direct coating is preferred for economical reasons, since there is no need for intermediate process liners.

A wide range of coating techniques to apply adhesives to film or textile backings is well known in the industry. According to the present invention, the following techniques may be used: gap coating, i.e., knife over roll, roll over roll, floating knife, knife over blanket; air knife coating; curtain coating; rotary screen coating; reverse roll coating; gravure coating; metering rod (Meyer bar) coating; slot die (Slot, Extrusion) coating and hot melt coating. All of these coating methods can be applied to manufacture the aforementioned tape of the present invention. Most preferably, gap coating is used. This gives best results concerning anchorage of the adhesive into the backing while at the same time avoiding striking through during the coating step.

Temperature is a major concern in automotive applications. For wire harness assemblies, automotive temperatures are typically segmented into four ranges. T1 applications do not exceed 85°C. T2 applications range from 86 to 105°C. T3 includes temperatures ranging from 106 to 125°C, and T4 applications involve temperatures of 126 to 150°C. Generally, tapes that use rubber and modified rubber adhesives are best for T1 and T2 applications. Acrylic adhesives perform well in the T3/T4 temperature range. Silicones are ideal for temperatures of T4 and higher.

### Converting

Harness tapes are supplied to the end-user as self-wound rolls, i.e., the tape is wound directly onto itself, with no interleaving or liner between the backing and the adhesive and the next layer of tape. Therefore consistent unwinding of the roll is of major importance. The force required to unwind tape from the roll is governed by the adhesion of the adhesive layer to the underlying external surface of the nonwoven backing. This adhesion can be controlled by lowering the surface energy of the support by applying so called release agents, LAB materials or repellents.

Suitable compounds include fluorocarbons, silicones or hydrocarbon chemicals applied to the support by sizing, spraying, Foulard or other suitable processes. Foulard application employs aqueous dispersions of repellents in concentrations between 0.1 vol% and 10 vol%. By adjusting the amount of the release agent, the adhesion to the backside and thus the unwinding force can be controlled and adjusted to the desired level. Suitable repellents include Zonyl available from DuPont, Oleophobol available from Ciba SC, Nuva available from Clariant, and a polyvinylstearate-carbamate copolymer Icafinish CS16 from ICAP-Sira.

### Examples

The Examples provided here were made using the following textile coat formulation. All raw materials used here are obtainable from ICAP-Sira.

| | |
|---|---|
| Coating Polymer | 100g aq. |
| Antifoam, Icawet N | 1 drop |
| Ammonia aq 1% | 1g |
| Thickener Acrilem 36630 | 3g, to reach 15000 mPas |

The coating polymer may be a polyurethane, acrylic, styrene-acrylic or a silicone polymer. In examples where silicone additive was used, 5% wetting agent was added.

A typical laboratory procedure to produce samples is as follows. A formulation of polymer dispersion as outlined above is applied to a sheet of polyester fabric held in a clamping fixture of approximately A4 in size. Manual coating was performed using a knife over air procedure followed by drying by any standard procedure well known in the art. The adhesive coating was applied to the sheet sample using a roll over roll coating head with 40 g/m² of solvent based acrylic adhesive, e.g. Durotak 1104, available from National Starch & Chemical.

The samples were then tested for their abrasion resistance using the Scrape Abrasion Test (ISO 6722:2006). A spring wire, with a diameter of 0.45 mm, in accordance with ISO 6931-1 is put in contact with a sample of tape wound around a mandrel of 6 mm diameter. Abrasion results are reported in cycles, with one cycle consisting of one reciprocating movement. When the needle abrades through the adhesive tape and makes contact with the mandrel, the machine stops and indicates the number of cycles required to wear away the tape.

The results from some of the tapes tested are shown in Table 1. These include results from different supports such as PET, cotton, and acetate. The PET support is further divided into "thick" and "thin" PET. In these particular tests, "thick" PET refers to a support woven from PET fibers comprising 45 warp threads per cm at 167 dtex and 25 weft threads per cm at 167 dtex. On the other hand, "thin" refers to a support woven from PET fibers comprising 40 warp threads per cm at 50 dtex and 22 weft threads per cm at 167 dtex. These values correspond to these two particular examples only and the inventive tape should not be construed as being limited to such values. A detailed description of the preferred ranges for these values can be found in the section "Detailed description of the invention".

A number of commercially available coatings were applied to the different supports and the results with (w/) and without (w/o) the coating are shown. The percentage gain in abrasion resistance is also shown for ease of comparison.

Abrasion resistance increased in all instances where a coating was applied to the support. A closer examination of the data shows that the increase in abrasion resistance is not uniform across all supports. In particular, cotton and acetate supports show a consistently lower increase in abrasion resistance as compared to the PET supports. In brief, these percentage gains in abrasion resistance for cotton and acetate (PET values in parenthesis) range from 11-100% for Acrilem ES8 (305-500%), 38-75% for Acrilem RP6005 (181-238%), and 43-125% for polyurethane (60-350%). It is therefore surprising that the PET support shows such marked increases in abrasion resistance.

As shown by the data, particularly surprising gains in abrasion resistance are observed with acrylic coatings on the PET supports, with the "thin" PET generally showing higher gains that the "thick" PET support. Another surprising and beneficial effect of the textile coating is the very moderate increase of maximum tensile strength. While abrasion resistance can be increased by up to 1000%, the corresponding increase of maximum tensile strength is small and always below 30%. This proves that tearabilty of the textile coated backing remains virtually unchanged compared to the plain fabric, while extraordinary improvement in abrasion resistance performance can be achieved.

Table 2 compares the abrasion resistance differences in adhesive tapes where the textile coating has been applied as an undercoat or overcoat. Concerning abrasion resistance, for most of the tapes, there is not much difference between a polymer top or undercoat. Thus, it is possible to use either a polymer top or undercoat to practice this invention.

Topcoat offers advantages in the following situations: The fluid resistance of the tape can be optimized by addition of repellents. Because the fabric is protected by the topcoat, chemical attack on the PET fibers can be prevented. Abrasion resistance can be optimized by using additives (see above) which reduce surface energy and coefficient of friction. Coating an adhesive on the fabric surface and not on the polymer coat surface can offer advantages when excellent anchorage of the adhesive is required. Anchorage to the fabric is easier than to the textile coating layer.

Undercoat preserves the textile surface of the tape. In addition, use of the undercoat will prevent excessive penetration of the adhesive into the fabric. The required adhesive coating weight to achieve desired performance can thus be minimized, since no adhesive is lost inside the fabric. As well known in the art, adhesion performance requires a layer of adhesive on top of the backing. Adhesive which is penetrating into the fabric provides necessary anchorage, but does not provide adhesion properties.

The impact of different coating weights on abrasion resistance is illustrated by samples prepared with Acrilem 360. For these samples, 18, 22 and 25 g/m2 were coated on thin PET fabric. Resulting abrasion resistance demonstrates the nonlinear increase with significant higher cycle counts for coating weights above 20 g/m2. Therefore, the variation of coating weights is another parameter allowing adjustment of performance properties of the textile coated fabric and final adhesive tape. By varying the coating weight, the desired hand tearability, abrasion resistance and flexibility properties may be obtained.

**Table 1. Improvement in abrasion resistance of adhesive tapes**

| **Fabric** | **Nature of coat** | **Name** | **Weight (g/m²)** | **Abrasion w/o** | **Abrasion w/** | **% gained** | **Tensile MD w/o [N/cm]** | **Tensile MD w/** | **% gained** |
|---|---|---|---|---|---|---|---|---|---|
| Thick PET (1838) | Acrylic | Acrilem ES8HV | 35 | 486 | 1357 | **179** | 198,4 | | |
| Thin PET (1810) | Acrylic | Acrilem ES8HV | 25 | 50 | 136 | **172** | 74 | | |
| Thick PET | Acrylic | Acrilem ES8 | 20 | 208 | 843 | **305** | 198,4 | 241,5 | **22** |
| Thin PET | Acrylic | Acrilem ES8 | 15 | 16 | 96 | **500** | 74 | 82,5 | **11** |
| Cotton | Acrylic | Acrilem ES8 | 25 | 21 | 35 | **67** | 46,6 | 60,4 | **30** |
| Acetate | Acrylic | Acrilem ES8 | 18 | 9 | 10 | **11** | 35,8 | 39,3 | **10** |
| Thick PET | Acrylic | Acrilem RP6005 | 30 | 208 | 584 | **181** | 198,4 | 244,4 | **23** |
| Thin PET | Acrylic | Acrilem RP6005 | 15 | 16 | 54 | **238** | 74 | 82,4 | **11** |
| Cotton | Acrylic | Acrilem RP6005 | 35 | 21 | 29 | **38** | 46,6 | 59,5 | **28** |
| Acetate | Acrylic | Acrilem RP6005 | 15 | 9 | 12 | **33** | 35,8 | 43.2 | **21** |
| Thick PET | Acrylic | Acrilem RP6650 | 13 | 208 | 1031 | **396** | 198.4 | 209,7 | **6** |
| Thin PET | Acrylic | Acrilem RP6650 | 17 | 16 | 184 | **1050** | 74 | 88,4 | **19** |
| Thick PET | Styrene-acrylic | Acrilem RP6397 | 12 | 208 | 630 | **203** | 198,4 | 210,6 | **6** |
| Thin PET | Styrene-acrylic | Acrilem RP6397 | 7 | 16 | 43 | **169** | 74 | 88,4 | **19** |
| Thick PET | Acrylic + silicone | RP6005+ H811 | 12 | 208 | 506 | **143** | 198,4 | 206,5 | **4** |
| Thin PET | Acrylic + silicone | RP6005+ H811 | 15 | 16 | 78 | **388** | 74 | 87,3 | **18** |
| Thick PET | PU | Idrocap 982 | 6 | 208 | 333 | **60** | 198,4 | 244,5 | **23** |
| Thin PET | PU | Idrocap 982 | 11 | 16 | 72 | **350** | 74 | | |
| Cotton | PU | Idrocap 982 | 20 | 21 | 30 | **43** | 46.6 | 90.5 | **94** |
| Acetate | PU | Idrocap 982 | 7 | 9 | 13 | **44** | 35.8 | 44.7 | **25** |

| | | | | | | | | | |
|---|---|---|---|---|---|---|---|---|---|
| w/ (with coating) w/o (without coating) | | | | | | | | | |

**Table 2. Comparison of undercoat and overcoat on abrasion resistance**

| **Fabric** | **Nature of coat** | **Name** | **Weight (g/m²)** | **Abrasion w/o** | **Abrasion w/ undercoat** | **% gained** | **Abrasion w/ topcoat** | **% gained** | **∧ undercoat/topcoat** |
|---|---|---|---|---|---|---|---|---|---|
| Thick PET | Acrylic | Acrilem ES8 | 20 | 208 | 843 | **305** | 813 | **291** | **104** |
| Thin PET | Acrylic | Acrilem ES8 | 15 | 16 | 96 | **500** | 82 | **413** | **117** |
| Thick PET | Acrylic | Acrilem RP6005 | 30 | 208 | 584 | **181** | 829 | **299** | **70** |
| Thin PET | Acrylic | Acrilem RP6005 | 15 | 16 | 54 | **238** | 82 | **413** | **66** |
| Thick PET | Acrylic | Acrilem RP6650 | 13 | 208 | 1031 | **396** | 1006 | **384** | **102** |
| Thin PET | Acrylic | Acrilem RP6650 | 17 | 16 | 184 | **1050** | 142 | **788** | **130** |
| Thick PET | Styrene-acrylic | Acrilem RP6397 | 12 | 208 | 630 | **203** | 838 | **303** | **76** |
| Thin PET | Styrene-acrylic | Acrilem RP6397 | 7 | 16 | 43 | 169 | 43 | 169 | 100 |
| Thick PET | Acrylic + silicone | RP6005+ H811 | 12 | 208 | 506 | **143** | 936 | **350** | **54** |
| Thin PET | Acrylic + silicone | RP6005+ H811 | 15 | 16 | 78 | **388** | 66 | **313** | **118** |
| Thick PET | PU | Idrocap 982 | 6 | 208 | 333 | **60** | 365 | **75** | **91** |
| Thin PET | PU | Idrocap 982 | 11 | 16 | 72 | **350** | 59 | **269** | **122** |

## Claims

1. An adhesive tape comprising a support woven from a plurality of threads formed in the majority out of poly(ethylene terephthalate), whereupon said support a polymer coating has been applied, and wherein the tape further comprises an adhesive coating.

2. The adhesive tape of Claim 1 where the polymer coating is on the side opposite the adhesive coating.

3. The adhesive tape of Claim 1 where the polymer coating is between the support and the adhesive coating.

4. The adhesive tape of any of the preceding claims where the support comprises warp and welt PET threads, **characterized in that** the warp and weft thread titre is less than or equal to 200 dtex, where the support comprises between about 35 and 65 warp threads per unit cm width and between about 20 and 30 weft threads per unit cm length.

5. The adhesive tape of any of the preceding claims where the polymer coating is applied from 5 to 30 g/m².

6. The adhesive tape of any of the preceding claims where the polymer coating is composed of an acrylic or a polyurethane, or a mixture of these polymers, possibly in combination with additives such as flame retardants, fillers, pigments and/or silicone additives.

7. The adhesive tape of claim 6 where the acrylic polymer comprises an acrylic co-polymer based on one or more of (1) an alkyl-acrylate where the alkyl group may contain a linear or branched C1-4 hydrocarbon group, (2) an alkylmethacrylate where the alkyl group may contain a linear or branched C1-4 hydrocarbon group, (3) acrylic acid, (4) methacrylic acid, (5) acrylonitrile, and (6) styrene.

8. The adhesive tape of claim 6 or claim 7 where the acrylic co-polymer consists of one or more of methyl methacrylate, ethyl-acrylate, butyl-acrylate, methacrylic acid, acrylonitrile, and styrene.

9. The adhesive tape of any of the preceding claims where the PET fibers and/or the polymer coating have been dyed.

10. A process for making the adhesive tape in claims 1 to 9 where the polymer coating is applied by those techniques known in the art as either floating knife, reverse roll coating or knife over blanket techniques.

11. Use of the adhesive tape according to any of claims 1 to 9 where said tape is used for wire harnessing in the automotive industry.
